# FASCICULE DE BREVET EUROPEEN

(11) **EP 3 436 288 B1**
(45) Date de publication et mention de la délivrance du brevet: **30.12.2020**
(21) Numéro de dépôt: 17713940.9
(22) Date de dépôt: 28.03.2017
(51) Int. Cl.: B60C 11/12, B60C 11/03

(54) **PNEUMATIQUE COMPORTANT UN BLOC AVEC DES INCISIONS**
REIFEN MIT EINEM BLOCK MIT EINSCHNITTEN
TYRE COMPRISING A BLOCK WITH INCISIONS

(30) Priorité: 30.03.2016 FR 1652728
(43) Date de publication de la demande: 06.02.2019
(73) Titulaire: Compagnie Générale des Etablissements Michelin, 63000 Clermont-Ferrand (FR)
(72) Inventeur: FABING, Daniel, 63040 CLERMONT-FERRAND CEDEX 09 (FR); BATNINI, Illyes, 63040 CLERMONT-FERRAND CEDEX 09 (FR); FRAENKEL, Bertrand, 63040 CLERMONT-FERRAND CEDEX 09 (FR); BUSA, Jeoffrey, 63040 CLERMONT-FERRAND CEDEX 09 (FR)
(74) Mandataire: Lasson, Cédric Yves
(86) Numéro de dépôt international: PCT/EP2017/057246
(87) Numéro de publication internationale: WO 2017/167711

(56) Documents cités:
- EP-A1- 0 590 375
- EP-A1- 2 860 049
- EP-A1- 3 205 516
- EP-A2- 0 829 381

## Description

La présente invention concerne un pneumatique pour véhicule automobile comportant une bande de roulement comprenant au moins un bloc, ce bloc ayant au moins une incision.

Le document EP-B1-0 829 381 divulgue un pneumatique comportant une bande de roulement, cette bande de roulement étant pourvue d'une pluralité de blocs de gomme. Par « bloc de gomme », on entend un élément en relief délimité par des rainures et comprenant des parois ou faces latérales et une face de contact, cette dernière étant destinée à venir en contact avec une chaussée pendant le roulage. Chaque bloc de gomme comprend des incisions débouchant sur les faces latérales du bloc.

De telles incisions sont prévues pour obtenir une adhérence suffisante du pneumatique sur une chaussée devenue glissante par la présence d'un film d'eau. Ces incisions ont pour effet de créer sur les blocs de gomme des arêtes supplémentaires destinées à couper le film d'eau recouvrant la chaussée.

Classiquement, comme illustré à la figure 2 du document EP-B1-0 829 381, les incisions s'étendent dans le bloc de gomme associé jusqu'à une profondeur D qui est inférieure à la profondeur h des rainures délimitant ce bloc. Ceci permet de maintenir une bonne rigidité globale de chaque bloc de gomme. Ainsi, pour chaque bloc, il existe une zone de gomme résiduelle, d'épaisseur h-D, entre le fond de chaque incision et le niveau du fond des rainures associées.

Au roulage, cette zone de gomme résiduelle est soumise à de fortes contraintes et il a été constaté une dégradation prononcée de cette zone avec des amorces de fissures.

On comprend donc qu'il existe un besoin d'améliorer la résistance mécanique d'une bande de roulement comportant des blocs de gommes incisés, tout en conservant une bonne rigidité de ces blocs.

Par ailleurs, le document EP-A1-2 860 049 décrit un pneumatique selon le préambule de la revendication 1.

L'invention concerne un pneumatique en matériau caoutchoutique comprenant une bande de roulement comportant une pluralité de blocs délimités par des rainures formées dans ladite bande de roulement, au moins un des blocs comprenant au moins une incision de longueur L débouchant au moins sur une première face latérale dudit bloc.

Selon une caractéristique générale de ladite incision, celle-ci présente une profondeur variable dans le sens de la longueur L. Ladite profondeur est maximale au moins dans une première partie d'extrémité de ladite incision qui débouche sur ladite première face latérale dudit bloc.

Ladite incision est pourvue de la première partie d'extrémité de profondeur P₁ constante et d'une partie principale de profondeur P₂ constante, reliée à ladite première partie d'extrémité et s'étendant en direction d'une deuxième face latérale dudit bloc, la profondeur P₁ étant supérieure à la profondeur P₂.

Ladite incision comprend au moins une première partie de liaison reliant la partie principale et la première partie d'extrémité et présentant une profondeur variable le long de sa longueur. La variation de profondeur de la première partie de liaison est progressive. Ladite première partie de liaison est reliée à la première partie d'extrémité par un premier rayon. Ladite première partie de liaison est reliée à la partie principale par un deuxième rayon.

Par « pneumatique », on entend tous les types de bandages élastiques soumis ou non à une pression interne.

On entend par « bande de roulement » d'un pneumatique, une quantité de matériau caoutchoutique délimitée par des surfaces latérales et par deux surfaces principales dont l'une est destinée à entrer en contact avec une chaussée lorsque le pneumatique roule.

Par « bloc » d'une bande de roulement, on entend un élément en relief délimité par des creux ou des rainures et comprenant des parois ou faces latérales et une face de contact, cette dernière étant destinée à venir en contact avec une chaussée pendant le roulage.

Par « rainure », on entend une découpure dont la distance entre les parois de matière est telle que ces parois ne peuvent venir en contact l'une contre l'autre dans des conditions usuelles de roulage. Cette distance pour une rainure est supérieure à 2 millimètres (mm).

Par « incision », on entend une découpure dont la distance entre les parois de matière est appropriée pour permettre la mise en contact au moins partielle des parois opposées délimitant ladite incision lors du passage dans le contact avec le sol. Cette distance pour une incision est ici au plus égale à 2 mm.

On entend par « profondeur maximale», la profondeur de l'incision mesurée au(x) point(s) situé(s) le(s) plus à l'intérieur du bloc.

Avec la conception de ladite incision telle que définie précédemment, l'épaisseur de la zone de gomme résiduelle disposée entre le fond de l'incision et le niveau du fond des rainures n'est pas constante le long de la longueur L de cette incision.

L'épaisseur de cette zone de gomme résiduelle est faible, voire nulle, juste au-dessous de la première partie d'extrémité de l'incision et cette épaisseur est plus importante dans le reste du bloc.

Ainsi, au cours du roulage du pneumatique, les contraintes mécaniques vont être majoritairement reprises par la zone de gomme résiduelle de plus grande épaisseur. Les phénomènes de concentrations de contraintes vont alors principalement avoir lieu à l'intérieur du bloc, et non sur la face latérale de ce bloc sur laquelle débouche la première partie d'extrémité de l'incision. On limite alors les amorces de fissuration sur cette face latérale du bloc.

Dans la partie de liaison de ladite incision, la zone de gomme résiduelle est variable le long de la longueur de cette partie. Comme indiqué précédemment, la variation de profondeur de la première partie de liaison est progressive. On limite ainsi la génération de fissures dans la zone de gomme résiduelle de plus grande épaisseur à l'intérieur du bloc.

La profondeur P₁ de ladite première partie d'extrémité est globalement égale à la profondeur des rainures. On entend par profondeur « globalement égale à la profondeur des rainures », une profondeur égale à plus ou moins 1 mm. De préférence, la profondeur P₁ de ladite première partie d'extrémité peut être strictement égale à la profondeur des rainures.

Dans un mode de réalisation, ladite incision comprend en outre une seconde partie d'extrémité opposée à la première partie d'extrémité et débouchant sur la deuxième face latérale dudit bloc, la seconde partie d'extrémité présentant une profondeur P₄ constante et supérieure à la profondeur P₂ de ladite partie principale. Avec cette conception particulière de l'incision, les concentrations de contraintes vont principalement avoir lieu à l'intérieur du bloc dans la zone de gomme résiduelle de plus grande épaisseur, et non sur les deux faces latérales de ce bloc sur lesquelles débouche l'incision. On limite alors les amorces de fissuration sur ces deux faces latérales du bloc.

De préférence, ladite incision comprend une seconde partie de liaison reliant la partie principale et la seconde partie d'extrémité et présentant une profondeur variable le long de sa longueur. Avantageusement, la variation de profondeur de la partie de liaison peut être progressive.

Dans un mode de réalisation, la première partie d'extrémité de ladite incision s'étend selon une direction axiale et la partie principale s'étend selon une direction oblique par rapport à cette direction axiale. Cette direction oblique de la partie principale de l'incision permet d'améliorer l'adhérence de la bande de roulement du pneumatique, notamment sur chaussée sèche et chaussée mouillée.

Par « direction axiale », on entend une direction parallèle à l'axe de rotation du pneumatique. Par « direction radiale », on entend une direction qui est perpendiculaire à l'axe de rotation du pneu, i.e. une direction qui correspond à la direction de l'épaisseur de la bande de roulement du pneumatique.

Par « direction circonférentielle », on entend une direction qui est tangente à tout cercle centré sur l'axe de rotation. Cette direction est perpendiculaire à la fois à la direction axiale et à la direction radiale.

Selon une caractéristique optionnelle, ladite incision présente une ondulation le long de sa longueur. Ceci permet de limiter le cisaillement des parties du bloc séparées par cette incision. Alternativement ou en combinaison, la partie principale de ladite incision présente une ondulation dans la profondeur dudit bloc. Cette conception particulière améliore la rigidité globale du bloc.

Selon une caractéristique optionnelle, ladite incision est délimitée par deux parois ou faces principales en regard, au moins une des faces étant pourvue d'au moins une protubérance en saillie pour réduire localement la largeur de ladite incision. Cette ou ces protubérances permettent d'augmenter la rigidité du bloc associé lorsque celui-ci est dans la zone de contact du pneumatique avec la chaussée. En effet, lors de ce contact, cette ou ces protubérances viennent en appui sur la face principale de l'incision en regard. En outre, la fermeture complète de l'incision est ainsi empêchée de sorte à améliorer l'adhérence de la bande de roulement du pneumatique sur une chaussée mouillée.

Dans un mode de réalisation, le matériau caoutchoutique du pneumatique présente une dureté Shore A inférieure à 70.

La présente invention sera mieux comprise à la lecture de la description détaillée de modes de réalisation pris à titre d'exemples nullement limitatifs et illustrés par les dessins annexés sur lesquels :
- la figure 1 est une vue en plan partielle de la bande de roulement d'un pneumatique comprenant une pluralité de blocs de gomme comportant des incisions selon un premier exemple de réalisation,
- la figure 2 est une vue en perspective partielle d'une incision selon l'axe II-II de la figure 1,
- la figure 3 est une vue en plan partielle d'un bloc de gomme de la bande de roulement d'un pneumatique selon un deuxième exemple de réalisation, et
- la figure 4 est une vue en perspective partielle d'une incision d'un bloc de gomme de la bande de roulement d'un pneumatique selon un troisième exemple de réalisation.

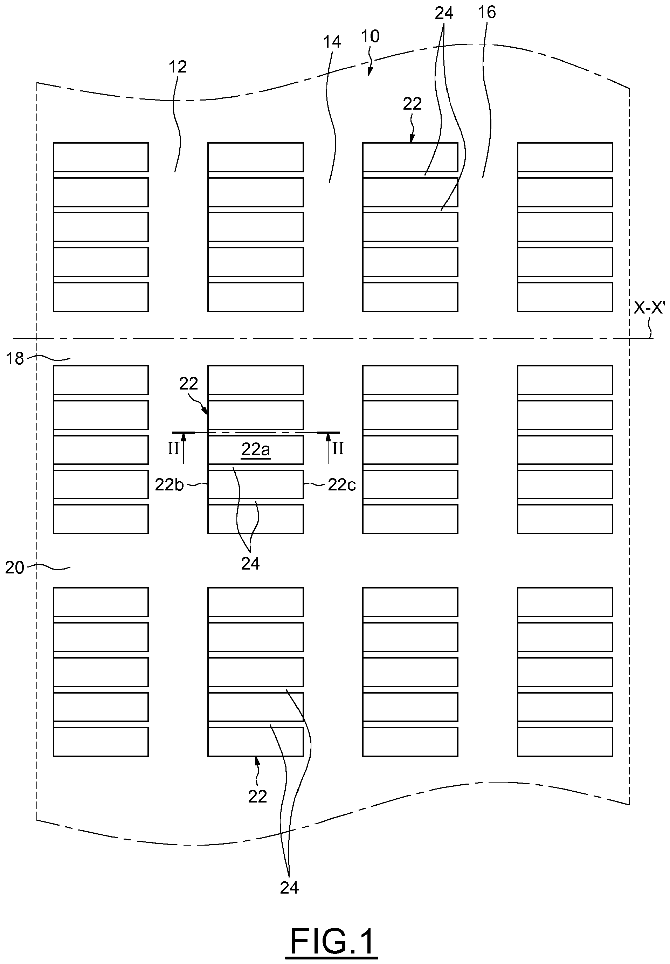

Sur la figure 1 est représentée partiellement une bande de roulement 10 d'un pneumatique sur laquelle sont formées plusieurs rainures principales 12 à 16 et plusieurs rainures secondaires 18 à 20 croisant les rainures principales et s'étendant transversalement par rapport à celles-ci. En considérant l'axe X-X' de rotation du pneumatique, les rainures principales 12 à 16 s'étendent circonférentiellement tandis que les rainures secondaires 18 à 20 s'étendent axialement. Alternativement, il pourrait être possible de prévoir une orientation différente des rainures secondaires. Les profondeurs des rainures principales 12 à 20 peuvent être égales entre elles ou différentes.

Les rainures principales et secondaires 12 à 20 forment un réseau de rainures délimitant une pluralité de blocs 22 sur la bande de roulement 10. Chaque bloc 22 comprend une face de contact 22a formant une partie de la surface de roulement de bande de roulement 10, cette face de contact 22a étant destinée à venir en contact avec une chaussée lors du roulage. Chaque bloc 22 comprend deux faces latérales opposées 22b, 22c circonférentielles et deux faces latérales opposées axiales (non référencées).

Dans l'exemple de réalisation illustré, chaque bloc 22 comprend des incisions 24, ici au nombre de quatre, délimitées chacune par deux faces principales en regard et espacées d'une distance non nulle. Chaque incision 24 de longueur L s'étend ici sur toute la largeur du bloc 22. Dans cet exemple, chaque incision 24 s'étend axialement.

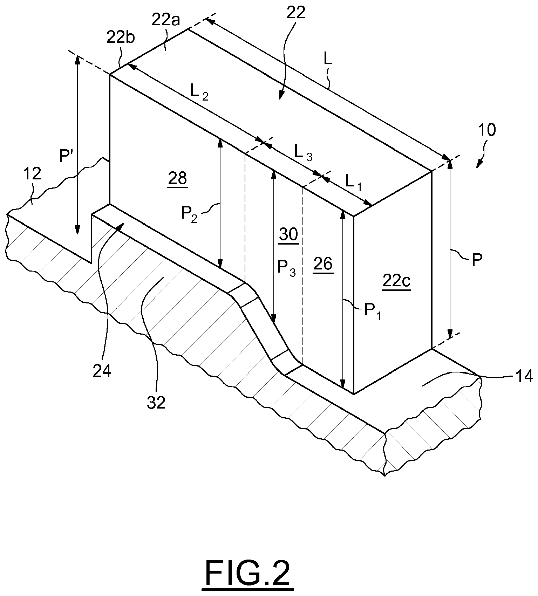

Comme illustré plus visiblement à la figure 2, chaque incision 24 débouche latéralement sur les deux faces latérales 22b, 22c opposées du bloc associé. L'incision 24 représentée sur cette figure débouche sur les faces latérales 22b, 22c et dans les rainures 14, 16. L'incision 24 présente une profondeur variable dans le sens de sa longueur L. La profondeur de l'incision 24 augmente dans une direction orientée du côté de la face latérale 22c du bloc. Dans l'exemple de réalisation illustré, la profondeur de l'incision 24 est inférieure ou égale à la profondeur P et P' des rainures 12, 14. La profondeur de l'incision 24 peut être globalement égale à la profondeur P et P' des rainures 12, 14 à plus ou moins 1 mm.

L'incision 24 comprend une partie d'extrémité 26 de profondeur P₁ débouchant sur la face latérale 22c du bloc, et une partie principale 28 de profondeur P₂ s'étendant à l'intérieur du bloc et débouchant ici sur la face latérale 22b opposée, ces parties étant reliées entre elles par une partie de liaison 30 de profondeur P₃.

La profondeur P₁ de la partie d'extrémité 26 est supérieure à la profondeur P₂ de la partie principale 28. La profondeur P₃ de la partie de liaison 30 est variable le long de sa longueur. La profondeur P₃ de la partie de liaison 30 est minimale dans la zone de liaison à la partie principale 28, et est maximale dans la zone de liaison à la partie d'extrémité 26. La variation de la profondeur P₃ est progressive le long de sa longueur. La partie de liaison 30 est reliée à la partie d'extrémité 26, respectivement à la partie principale 28, par un rayon ou congé. Ces deux rayons peuvent être égaux ou différents. A titre indicatif, ces rayons peuvent être strictement supérieurs à 0.5 mm et par exemple être inférieurs ou égaux à 2 mm. Le fond de la partie de liaison 30 relie le fond de la partie d'extrémité 26 et le fond de la partie principale 28.

Comme indiqué précédemment, l'incision 24 présente une profondeur variable dans le sens de sa longueur L. En d'autres termes, la distance séparant le fond de l'incision 24 de la face de contact 22a du bloc 22 n'est pas uniforme le long de la longueur L.

Ainsi, une zone de gomme résiduelle 32 subsistant entre le fond de l'incision 24 et le niveau du fond des rainures 12, 14 présente une épaisseur variable dans le sens de la longueur L de l'incision. La zone de gomme résiduelle 32 s'étend en saillie radiale relativement au fond des rainures 12, 14.

Dans l'exemple de réalisation illustré, l'épaisseur de la zone de gomme résiduelle 32 est maximale au-dessous de la partie principale 28 de l'incision et diminue progressivement au-dessous de la partie de liaison 32 jusqu'à à être nulle pour la partie d'extrémité 26. Au cours du roulage du pneumatique, les contraintes mécaniques vont être majoritairement reprises par la partie de la zone de gomme résiduelle 32 de plus grande épaisseur située au-dessous de la partie principale 28 de l'incision. Les phénomènes de concentrations de contraintes vont alors principalement avoir lieu dans cette zone, et non sur la face latérale 22c du bloc.

Dans l'exemple de réalisation illustré, la profondeur P₁ de la partie d'extrémité 26 est égale à la profondeur P de la rainure 14. En variante, la profondeur P₁ pourrait être inférieure à la profondeur P de sorte que la zone de gomme résiduelle 32 présente une épaisseur faible et non nulle au-dessous de la partie d'extrémité 26 de l'incision. La profondeur P₁ peut être globalement égale à la profondeur P de la rainure 14 à plus ou moins 1 mm.

A titre indicatif, les longueurs L₁, L₂, L₃ de la partie d'extrémité 26, de la partie principale 28 et de la partie de liaison 30 de l'incision peuvent être définies par les relations suivantes :
1 mm ≤ L₁ ≤ 5mm, et
10% L₃ ≤ L₁ ≤ 20% L₃, et
10% L₁ ≤ L₂ ≤ 10% L₃.

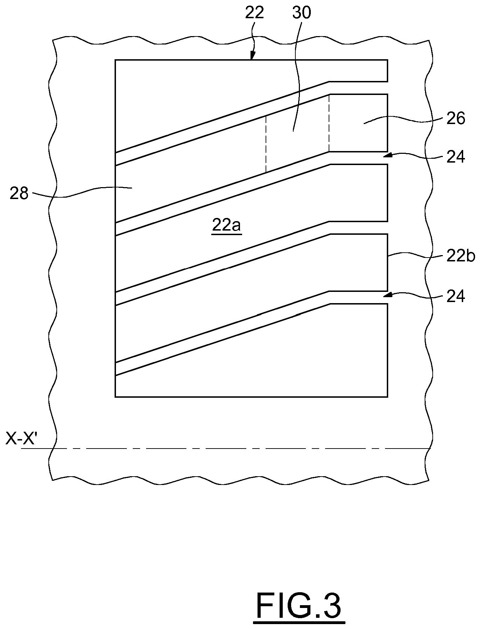

Dans l'exemple de réalisation illustré, les incisons 24 des blocs s'étendent axialement en considérant l'axe X-X' de rotation du pneumatique. En variante, il est possible de prévoir une orientation différente des incisions 24. Par exemple, comme illustré à la figure 3, la partie d'extrémité 26 de chaque incision 24 s'entend selon l'axe X-X' tandis que la partie principale 28 et la partie de liaison 30 s'étendent selon une direction oblique par rapport à cet axe. Cette orientation oblique permet d'améliorer l'adhérence de la bande de roulement du pneumatique, notamment sur des chaussées sèche et mouillée.

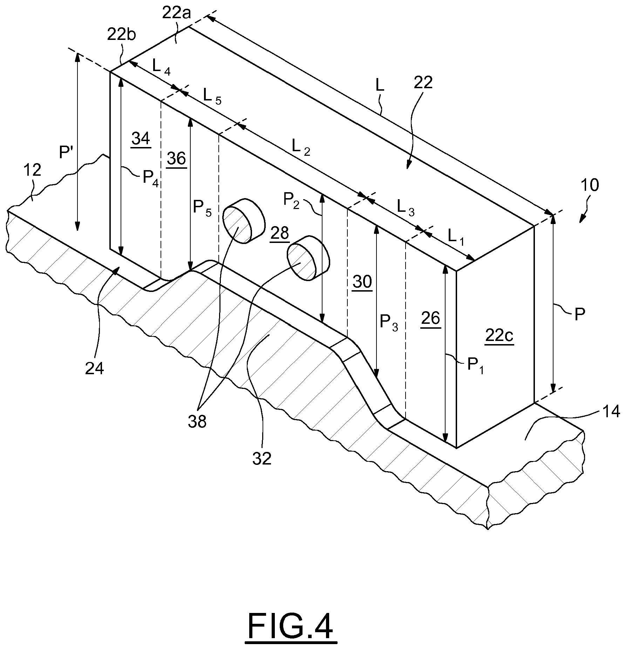

L'exemple de réalisation illustré à la figure 4, sur laquelle les éléments identiques portent les mêmes références, diffère de l'exemple illustré à la figure 2 en ce que l'incision 24 présente une seconde partie d'extrémité 34 de profondeur P₄ qui est opposée à la première partie d'extrémité 26 et débouche sur la face latérale 22b du bloc. L'incision 24 comprend également une seconde partie de liaison 36 de profondeur P₅ reliant la seconde partie d'extrémité 34 à la partie principale 28.

La profondeur P₄ de la seconde partie d'extrémité 34 est supérieure à la profondeur P₂ de la partie principale 28. Dans cet exemple, la profondeur P₄ est égale à la profondeur P₁ de la première partie d'extrémité 26. Alternativement, il est possible de prévoir des profondeurs P₄ et P₁ différentes. Dans cet exemple, la profondeur P₄ de la seconde partie d'extrémité 34 est égale à la profondeur P' de la rainure 12. En variante, la profondeur P₄ pourrait être inférieure à la profondeur P' de sorte que la zone de gomme résiduelle 32 présente une épaisseur faible non nulle au-dessous de la partie d'extrémité 34 de l'incision. La profondeur P₄ peut être globalement égale à la profondeur P' à plus ou moins 1 mm. La profondeur P₅ de la seconde partie de liaison 36 est variable le long de sa longueur. La variation de la profondeur P₅ est progressive le long de sa longueur.

Avec cette conception particulière de l'incision 24 qui comporte deux parties d'extrémités opposées 26, 34 débouchant chacune sur une des faces latérales 22b, 22c du bloc et présentant une profondeur accrue par rapport au reste de l'incision, le risque d'apparition de fissures sur les faces 22b, 22c est limité lors du roulage.

Dans cet exemple de réalisation, une des faces principales de l'incision 24 comprend des plots 38, ici au nombre de deux, formant des protubérances en saillie qui s'étendent en direction de l'autre face principale de l'incision tout en restant à distance de celle-ci. Ces plots 38 permettent de réduire localement la largeur de l'incision 24 et d'augmenter la rigidité du bloc 22 lorsque celui-ci est dans la zone de contact du pneumatique avec la chaussée.

Dans les exemples de réalisation illustrés, les faces principales des incisions 24 sont planes. En variante, il est par exemple envisageable, sans sortir du cadre de l'invention, de prévoir des incisions présentant des faces courbes ou ondulées le long de leur longueur. Dans un mode de réalisation, les incisions peuvent également présenter des faces en créneau le long de leur longueur. Alternativement ou en combinaison, il pourrait être possible de prévoir pour les parties principales des incisions une ondulation dans la profondeur du bloc associé.

Grâce à l'invention, pour une incision donnée de longueur L d'un bloc de gomme de la bande de roulement du pneumatique, la profondeur de cette incision varie entre une profondeur minimale et une profondeur maximale dans le sens de la longueur L, la profondeur maximale étant prévue au moins sur une partie d'extrémité de l'incision qui débouche sur une face latérale du bloc.

## Revendications

1. Pneumatique en matériau caoutchoutique comprenant une bande de roulement (10) comportant une pluralité de blocs (22) délimités par des rainures (12, 14) formées dans ladite bande de roulement, au moins un des blocs comprenant au moins une incision (24) de longueur L débouchant au moins sur une première face latérale (22c) dudit bloc, ladite incision (24) présentant une profondeur variable dans le sens de la longueur L, ladite profondeur étant maximale au moins dans une première partie d'extrémité (26) de ladite incision qui débouche sur ladite première face latérale (22c) dudit bloc, ladite incision étant pourvue de la première partie d'extrémité (26) de profondeur P₁ sensiblement constante et d'une partie principale (28) de profondeur P₂ sensiblement constante, reliée à ladite première partie d'extrémité et s'étendant en direction d'une deuxième face latérale (22b) dudit bloc, la profondeur P₁ étant supérieure à la profondeur P₂, **caractérisé en ce que** ladite incision comprend au moins une première partie de liaison (30) reliant la partie principale (28) et la première partie d'extrémité (26) et présentant une profondeur qui varie progressivement le long de sa longueur, ladite première partie de liaison (30) est reliée à la première partie d'extrémité (26), respectivement à la partie principale (28), par un rayon, la profondeur P₁ de ladite première partie d'extrémité (26) étant globalement égale à la profondeur des rainures (12, 14).

2. Pneumatique selon la revendication 1, dans lequel ladite incision comprend en outre une seconde partie d'extrémité (34) opposée à la première partie d'extrémité (26) et débouchant sur la deuxième face latérale (22b) dudit bloc, la seconde partie d'extrémité présentant une profondeur P₄ sensiblement constante et supérieure à la profondeur P₂ de ladite partie principale.

3. Pneumatique selon la revendication 2, dans lequel ladite incision comprend une seconde partie de liaison (36) reliant la partie principale (28) et la seconde partie d'extrémité (34) et présentant une profondeur variable le long de sa longueur.

4. Pneumatique selon l'une quelconque des revendications précédentes, dans lequel la première partie d'extrémité (26) de ladite incision s'étend selon une direction axiale et la partie principale (28) s'étend selon une direction oblique par rapport à cette direction axiale.

5. Pneumatique selon l'une quelconque des revendications précédentes, dans lequel la partie principale (28) de ladite incision présente une ondulation dans la profondeur dudit bloc.

6. Pneumatique selon l'une quelconque des revendications précédentes, dans lequel ladite incision est délimitée par deux faces principales en regard, au moins une des faces étant pourvue d'au moins une protubérance en saillie pour réduire localement la largeur de ladite incision.

7. Pneumatique selon l'une quelconque des revendications précédentes, dans lequel ladite incision présente une ondulation le long de sa longueur L.

8. Pneumatique selon l'une quelconque des revendications précédentes, dans lequel le matériau caoutchoutique présente une dureté Shore A inférieure à 70.

## Patentansprüche

1. Reifen aus Kautschukmaterial, welcher einen Laufstreifen (10) umfasst, der mehrere Blöcke (22) aufweist, die von im Laufstreifen ausgebildeten Rillen (12, 14) begrenzt werden, wobei wenigstens einer der Blöcke wenigstens einen Einschnitt (24) der Länge L umfasst, der auf wenigstens einer ersten seitlichen Fläche (22c) des Blockes mündet, wobei der Einschnitt (24) eine variable Tiefe in der Richtung der Länge L aufweist, wobei diese Tiefe wenigstens in einem ersten Endteil (26) des Einschnittes, welcher auf der ersten seitlichen Fläche (22c) des Blockes mündet, maximal ist, wobei der Einschnitt mit dem ersten Endteil (26) von im Wesentlichen konstanter Tiefe P₁ und mit einem Hauptteil (28) von im Wesentlichen konstanter Tiefe P₂, der mit dem ersten Endteil verbunden ist und sich in Richtung einer zweiten seitlichen Fläche (22b) des Blockes erstreckt, versehen ist, wobei die Tiefe P₁ größer als die Tiefe P₂ ist, **dadurch gekennzeichnet, dass** der Einschnitt wenigstens einen ersten Verbindungsteil (30) umfasst, der den Hauptteil (28) und den ersten Endteil (26) verbindet und eine Tiefe aufweist, welche sich entlang seiner Länge allmählich ändert, wobei der erste Verbindungsteil (30) mit dem ersten Endteil (26) bzw. mit dem Hauptteil (28) über eine Rundung verbunden ist, wobei die Tiefe P₁ des ersten Endteils (26) im Wesentlichen gleich der Tiefe der Rillen (12, 14) ist.

2. Reifen nach Anspruch 1, wobei der Einschnitt außerdem einen zweiten Endteil (34) umfasst, der dem ersten Endteil (26) gegenüberliegt und auf der zweiten seitlichen Fläche (22b) des Blockes mündet, wobei der zweite Endteil eine Tiefe P₄ aufweist, die im Wesentlichen konstant und größer als die Tiefe P₂ des Hauptteils ist.

3. Reifen nach Anspruch 2, wobei der Einschnitt einen zweiten Verbindungsteil (36) umfasst, der den Hauptteil (28) und den zweiten Endteil (34) verbindet und eine entlang seiner Länge variable Tiefe aufweist.

4. Reifen nach einem der vorhergehenden Ansprüche, wobei der erste Endteil (26) des Einschnitts sich in einer axialen Richtung erstreckt und der Hauptteil (28) sich in einer in Bezug auf diese axiale Richtung schrägen Richtung erstreckt.

5. Reifen nach einem der vorhergehenden Ansprüche, wobei der Hauptteil (28) des Einschnitts eine Welligkeit in der Tiefe des Blockes aufweist.

6. Reifen nach einem der vorhergehenden Ansprüche, wobei der Einschnitt von zwei einander gegenüberliegenden Flächen begrenzt wird, wobei wenigstens eine der Flächen mit wenigstens einer vorstehenden Erhebung versehen ist, um die Breite des Einschnitts lokal zu verringern.

7. Reifen nach einem der vorhergehenden Ansprüche, wobei der Einschnitt eine Welligkeit entlang seiner Länge L aufweist.

8. Reifen nach einem der vorhergehenden Ansprüche, wobei das Kautschukmaterial eine Shore-Härte A aufweist, die kleiner als 70 ist.

## Claims

1. Tyre made of a rubbery material, comprising a tread (10) comprising a plurality of blocks (22) delimited by grooves (12, 14) formed in the said tread, at least one of the blocks comprising at least one sipe (24) of length L opening at least onto a first lateral face (22c) of the said block, the said sipe (24) having a depth that is variable in the direction of the length L, the said depth being at a maximum at least in a first end part (26) of the said sipe which opens onto the said first lateral face (22c) of the said block, the said sipe having the first end part (26) of substantially constant depth P₁ and a main part (28) of substantially constant depth P₂ connected to the said first end part and extending towards a second lateral face (22b) of the said block, the depth P₁ being greater than the depth P₂, **characterized in that** the said sipe comprises at least a first connecting part (30) connecting the main part (28) and the first end part (26) and having a depth that varies progressively along its length, the said first connecting part (30) is connected to the first end part (26) and, respectively, to the main part (28), by a radius, the depth P₁ of the said first end part (26) being roughly equal to the depth of the grooves (12, 14).

2. Tyre according to Claim 1, in which the said sipe further comprises a second end part (34) opposite to the first end part (26) and opening onto the second lateral face (22b) of the said block, the second end part having a depth P₄ that is substantially constant and greater than the depth P₂ of the said main part.

3. Tyre according to Claim 2, in which the said sipe comprises a second connecting part (36) connecting the main part (28) and the second end part (34) and having a depth that is variable along its length.

4. Tyre according to any one of the preceding claims, in which the first end part (26) of the said sipe extends in an axial direction and the main part (28) extends in a direction that is oblique with respect to this axial direction.

5. Tyre according to any one of the preceding claims, in which the main part (28) of the said sipe exhibits undulation into the depth of the said block.

6. Tyre according to any one of the preceding claims, in which the said sipe is delimited by two main faces facing one another, at least one of the faces being provided with at least one projecting protrusion in order to locally reduce the width of the said sipe.

7. Tyre according to any one of the preceding claims, in which the said sipe exhibits undulation along its length L.

8. Tyre according to any one of the preceding claims, in which the rubbery material has a Shore A hardness of less than 70.
